# EUROPEAN PATENT APPLICATION

(11) **EP 3 666 857 A1**
(43) Date of publication of application: **17.06.2020**
(21) Application number: 19783961.6
(22) Date of filing: 30.05.2019
(51) Int. Cl.: C10G 65/12, C10G 3/00, C10G 45/60, C10G 47/16

(54) **METHOD FOR PRODUCING LIQUID HYDROCARBON FUEL**

(30) Priority: 30.10.2018 JP 2018203413
(71) Applicant: Revo International Inc., Kyoto-shi, Kyoto 612-8473 (JP)
(72) Inventor: TSUTO, Keiichi, Itami-shi, Hyogo 664-0872 (JP); AZUMA, Yuichiro, Kyoto-shi, Kyoto 612-8473 (JP); MATSUNAGA, Kotetsu, Kyoto-shi, Kyoto 612-8473 (JP); NODA, Mizuho, Kyoto-shi, Kyoto 612-8473 (JP)
(74) Representative: Vossius & Partner Patentanwälte Rechtsanwälte mbB
(86) International application number: PCT/JP2019/021619
(87) International publication number: WO 2020/090141

(57) **Abstract**

The present invention relates to a method for producing a liquid hydrocarbon fuel comprising a first reaction step and a second reaction step given below: (1) a first reaction step: hydrocracking a raw material oil in the presence of a hydrocracking reaction catalyst at a feeding pressure of hydrogen of from 0.2 to 0.95 MPa, a liquid hourly space velocity of a liquid volume of the raw material oil of from 0.05 to 0.5 hr⁻¹, and a ratio of a flow rate of the hydrogen to a flow rate of the raw material oil of from 100 to 1,000 NL of the hydrogen per 1 L of the raw material oil; and (2) a second reaction step: hydrogenating the cracked solution in the presence of a hydrogenation reaction catalyst at a feeding pressure of hydrogen of from 0.2 to 0.95 MPa, a liquid hourly space velocity of a liquid volume of the raw material oil of from 0.2 to 5 hr⁻¹, and a ratio of a flow rate of the hydrogen to a flow rate of the raw material oil of from 100 to 1,000 NL of the hydrogen per 1 L of the raw material oil. According to the present invention, a desired liquid hydrocarbon fuel can be produced by carrying out a combination of the hydrocracking reaction and the hydrogenation reaction of a raw material oil such as fats and oils in a given composition by feeding a low-pressure hydrogen of nearly a normal pressure.

## Description

### TECHNICAL FIELD

The present invention relates to a liquid hydrocarbon fuel which is excellent as a liquid fuel having low-temperature flowability, oxidation stability or the like, obtainable by hydrocracking or hydrogenating a raw material oil, for example, fats and oils and biomass retort oils, or a hydrocarbon or the like in a petroleum oil, a method for producing the liquid hydrocarbon fuel, and an apparatus for producing the liquid hydrocarbon fuel.

### BACKGROUND ART

It has been remarked to produce hydrocarbons from biomass, and has been desired to provide them as liquid fuels, from the viewpoint of being reproducible, and reducing the amount of carbon dioxide discharged by carbon neutralization.

Presently, as fuels using biomass as a raw material, methyl esters of fatty acids are practically used as diesel fuels. However, the methyl esters of fatty acids produce about 10% of glycerol, a raw material of fats and oils as a by-product, and complete removal of this glycerol is difficult, so that the quality of the fuels is also lowered. Also, the methyl esters of fatty acids are disadvantageous in that viscosities are large, from the viewpoint of low-temperature flowability. In addition, the methyl esters of fatty acids have an unsaturated bonding group in a carbon chain, so that the oxidation stability is poor. As described above, the methyl esters of fatty acids are yet disadvantageous in quality.

As liquid hydrocarbon fuels of the next generations, a biomass raw material oil which is reacted with hydrogen under high temperatures and high pressures in the presence of a catalyst, to form a hydrocarbon from an alkyl chain of the fats and oils has been considered. However, it is limited to the techniques for production of petroleum fuels that are practiced, in other words, the high-temperature, high-pressure hydrocracking techniques (Patent Publication 1 and Non-Patent Publication 1). According to these publications, high pressures of from 2 to 5 MPa are required, and it can be assumed that the reaction hardly progresses at a normal pressure, so that experimental results at a normal pressure are not given. In Patent Publication 1, it is recommended that a preferred pressure is from 1 to 5 MPa. The studies of the fields to be especially referred are Non-Patent Publication 1, in which experimentations are conducted in which a catalyst is nickel or molybdenum supported to silica-alumina, a raw material fat or oil is Jatropha oil, and a pressurized fixed bed reaction apparatus (1 to 8 MPa) is used, and the results of from 2 to 8 MPa are favorable, but the reaction efficiency is markedly lowered at a pressure of from a normal pressure to nearly 1 Mpa. Also, only the manufactured products limited primarily to C15 to 17 of the carbon components of the raw material Jatropha oil are obtained.

Besides the above, it is also considered that a fat or oil is gasified, and a hydrocarbon is produced from the gas via Fischer-Tropsch synthesis. These can be referred in the same manner as the steps in the case of the petroleum raw material, which is a high-temperature, high-pressure technique.

The method of hydrocracking a fat or oil in the above publications or the like includes saturating an unsaturated binding group of a fat or oil by hydrogenation to remove oxygen, and at the same time cracking an ester site of a fat or oil. In the hydrodeoxygenation reaction, a paraffin-based hydrocarbon, water, propane, or the like is produced from an ester site and hydrogen in the presence of a catalyst by hydrogenation dehydration reaction, decarbonylation reaction, and decarboxylation reaction, under high temperatures and high pressures.

For example, it is disclosed that using a desulfurization and hydrogenation catalyst as a catalyst and a purified palm oil as a fat or oil, palm oil is cracked at a reaction pressure of 6 MPa and a reaction temperature of 260°C or higher, to produce 85% or so of a gas oil fraction, 10% of water, and 5% of gas (carbon dioxide, methane, propane). The reaction product obtained is constituted by a linear hydrocarbon having 15 carbon atoms to 18 carbon atoms, having physical properties nearing a gas oil (Non-Patent Publication 2). However, since the n-paraffin is the main component, there is a disadvantage in low-temperature flowability, and the product does not sufficiently satisfy other properties as fuels.

On the other hand, the hydrocracking technique to a hydrocarbon in a petroleum oil is nearly in a realm of perfection and well known to be practiced. According to a text book (Non-Patent Publication 3), a catalyst in which a precious metal such as platinum is added to a zeolite-based solid acid catalyst is used as a cracking catalyst, and naphtha, kerosene, gas oil, or the like is produced in a reaction under high-temperature, high-pressure conditions. During the reaction, besides the cracking of the carbon chain, cyclized dehydrogenation, dehydrogenation, or isomerization takes place, so that physical properties required for fuels such as calorimetric amount, octane number, and cetane number are given. By the addition of platinum to the catalyst, the carbon formation on the catalyst caused by hydrogen deficiency in various reactions mentioned above is suppressed by high-pressure hydrogen, which makes the life of the catalyst practically durable.

The developmental current situations on the liquid hydrocarbon fuels derived from biomass raw materials are fuels that are mainly equivalent to a gas oil, and the development of jet fuels that are equivalent to kerosene with the odds in demands are just started (Non-Patent Publication 5). The techniques that aim for practical use are:
1. to produce a synthetic gas of biomass according to high-temperature gasification, and to produce via Fischer-Tropsch synthesis;
2. to perform high-temperature pyrolysis to produce a crude petroleum oil, and to carry out hydrogenation;
3. to obtain an alcohol from biomass according to fermentation, and then subjecting the alcohol to hydrogenation; and
4. to hydrocrack or the like a fat or oil.
As mentioned above, a high-temperature, high-pressure treatment is an essential technique.

Any of the above techniques are production techniques in which high-pressure hydrogen is essential which is economically disadvantageous.

Studies that are free from hydrogen at an ambient pressure are also conducted.

According to Patent Publication 2, a product which is equivalent to a gas oil is obtained from palm oil, Jatropha oil, a waste cooling oil or the like at a temperature of from 400° to 430°C using an MgO catalyst supported to carbons. However, the carbon chain distribution is limited to the carbon chains of the raw materials of the same kinds, whereby it is made difficult to obtain a liquid hydrocarbon fuel flexibly according to the applications required, in other words, a liquid hydrocarbon fuel that is equivalent to gasoline or kerosene as a main manufactured article cannot be obtained. The oxidation stability or the like is not mentioned therein, and certain queries remain on the saturation of unsaturated bonds because no hydrogens are used.

According to Patent Publication 3, it is performed under a hydrogen pressure of an ambient pressure. An example under an ambient pressure is disclosed using a catalyst prepared by a specialized catalyst preparation. The disclosed contents are as follows: [Optimization of the reaction conditions (temperature, LHSV (liquid hourly space velocity), hydrogen feeding rate, pressure of 1 MPa or less, or the like) and optimization of the catalyst preparation (molybdenum addition / sulfurization treatment), in addition to the number of carbon atoms, can more approximate to the properties of a gas oil or kerosene, whereby the industrial long-term use of the life of the catalyst can be accomplished. If subjected to a fractional distillation, a kerosene equivalent product and a gas oil equivalent product can be separately obtained.] However, the properties that are to be owned as fuels, which are specifically low-temperature flowability, oxidation stability, and the like are not mentioned at all.

Therefore, as to biofuels applicable to internal combustion engines, including jet engines, the technique in which fuels derived from biomass having carbon distributions within the range as shown in Non-Patent Publication etc. (FIG. 2), gasoline, kerosene (jet fuels), and gas oils (diesel fuels) are produced in accordance with the applications, so that measures for satisfying the properties to be owned as the fuels are taken, and that the techniques for economically advantageously producing the fuels under a low-pressure hydrogen are desired.

### PRIOR ART REFERENCES

### PATENT PUBLICATIONS

Patent Publication 1: JP-A-2011-148909
Patent Publication 2: JP-B-5721152
Patent Publication 3: WO 2017/208497

### NON-PATENT PUBLICATIONS

Non-Patent Publication 1: Dai-6-Kai Shin Enerugii Shinpoziumu (6th New Energy Symposium) (March 11, 2011) "Shokubutsu-yu karano Baio-Keiyu (BHD) no Seizo (Production of Bio-Hydrogenated Diesel (BHD) from Vegetable Oils)," (Independent Administrative Agency) the National Institute of Advanced Industrial and Technology (AIST), LIU, MURATA, INABA, TAKAHARA
Non-Patent Publication 2: Koyama et al., "Jidosha-Nenryo notameno Shokubutsuyu no Suisoka Shori Kotei (Hydrogenation Treatment Process of Vegetable Oils for Automobile Fuels)" SAEpaper, No. 2007-01-2030(2007) 1-6
Non-Patent Publication 3: "Atarashii Shokubai Kagaku (New Catalyst Chemistry) 2nd edition," Kikuchi et al., Sankyo Shuppan, 1997
Non-Patent Publication 4: *"*Seiyu-sho, Yusou-sho niokeru Dojou-osen Jokyou Haaku Gijutsu no Kaihatsu (Development of Technologies in Grasping Soil Contamination Situations in Oil Refinery or Oil Tank)" (Osen-joukyou Monitaringu Gijutsu-Guruupu (Contamination Situations Monitoring Technical Group)) K. OKAMURA, M. TAZAKI Non-Patent Publication 5: Koukuu Gyokai no Saisei-kanou Jetto Nenryo eno Torikumi-joukyou (Current Act(2) on Reproducible Jet Fuels in Aviation Industries) JPEC Report, Fiscal Year of 2015, tenth, July 10, 2015

### SUMMARY OF THE INVENTION

### PROBLEMS TO BE SOLVED BY THE INVENTION

An object of the present invention is to provide a method for producing a liquid hydrocarbon fuel including hydrocracking a raw material oil such as fats and oils and biomass retort oils, or a hydrocarbon or the like in petroleum oils, to give a liquid hydrocarbon fuel having excellent low-temperature flowability and oxidation stability that is equivalent to gasoline, kerosene or a gas oil.

Another object of the present invention is to economically advantageously provide a production apparatus thereof. Still another object of the present invention is to provide a catalyst with which a liquid hydrocarbon fuel can be produced even when a hydrogen gas is supplied at a low feeding pressure, a production method using the catalyst and a production apparatus using the catalyst.

### MEANS TO SOLVE THE PROBLEMS

As a result of intensive studies in order to solve the above problems, the present inventors have found that raw materials of various liquid hydrocarbon fuels are subjected to a combination of a hydrocracking reaction and a hydrogenation reaction in the presence of a particular cracking catalyst and in the presence of a hydrogenation catalyst that supports a particular metal at a low pressure of from 0.2 to 0.95 MPa, whereby a liquid hydrocarbon fuel equivalent to and nearly satisfying each of the properties of gasoline, kerosene or a gas oil can be selectively and economically advantageously produced, and the present invention has been perfected thereby.

Specifically, the gist of the present invention relates to the following [1] to [8]:
[1] a method for producing a liquid hydrocarbon fuel comprising a first reaction step and a second reaction step given below:
   the first reaction step: hydrocracking a raw material oil in the presence of a hydrocracking reaction catalyst,
   at a feeding pressure of hydrogen of from 0.2 to 0.95 MPa,
   a liquid hourly space velocity of a liquid volume of the raw material oil of from 0.05 to 0.5 hr⁻¹, and
   a ratio of a flow rate of the hydrogen to a flow rate of the raw material oil of from 100 to 1,000 NL of the hydrogen per 1 L of the raw material oil, wherein the hydrocracking reaction catalyst is a catalyst containing one or more members selected from Group 1 and/or Group 2 given below:
   Group 1: a solid acid catalyst including zeolite and/or silica-alumina; and
   Group 2: a catalyst in which one or more metal components selected from the group consisting of ruthenium, nickel, molybdenum, and copper are supported to the solid acid catalyst, to give a cracked solution; and
      the second reaction step: hydrogenating the cracked solution in the presence of a hydrogenation reaction catalyst
      at a feeding pressure of hydrogen of from 0.2 to 0.95 MPa,
      a liquid hourly space velocity of a liquid volume of the cracked solution of from 0.2 to 5 hr⁻¹, and
      a ratio of a flow rate of the hydrogen to a flow rate of the cracked solution of from 100 to 1,000 NL of the hydrogen per 1 L of the cracked solution, wherein the hydrogenation reaction catalyst is a catalyst containing one or more members selected from Group 3 and/or Group 4 given below:
   Group 3: a solid acid catalyst including silica, zeolite and/or silica-alumina to which one or more metal components selected from the group consisting of nickel, palladium, and copper are supported; and
   Group 4: an MgO-containing silica to which one or more metal components selected from the group consisting of nickel, palladium, and copper are supported, to give a liquid hydrocarbon fuel.
[2] The method for producing a liquid hydrocarbon fuel according to the above [1], wherein the raw material oil is one or more members selected from the group consisting of rapeseed oil, cottonseed oil, palm oil, coconut oil, sunflower oil, soybean oil, corn oil, rice oil, oil palm oil, coconut oil, Jatropha oil, olive oil, consumed waste cooking oils, dark oils, animal oils, fats and oils from seaweeds and algae, biomass retort oils, a hydrocarbon component in petroleum oil having the number of carbon atoms larger than gas oil, and various waste oils.
[3] The method for producing a liquid hydrocarbon fuel according to the above [1] or [2], wherein the solid acid catalyst is one or more solid acid catalysts selected from the group consisting of silica, silica-alumina, zeolite, silica-zirconia, alumina-zirconia, and titania.
[4] The method for producing a liquid hydrocarbon fuel according to any one of the above [1] to [3], wherein the hydrocracking reaction catalyst or hydrogenation reaction catalyst further includes a metal supported thereto, wherein the metal is one or more members selected from the group consisting of platinum, iridium, iron, cobalt, rhenium, and magnesium.
[5] The method for producing a liquid hydrocarbon fuel according to any one of the above [1] to [4], wherein the liquid hydrocarbon fuel has a controlled carbon distribution depending upon its purpose, and has low-temperature flowability and oxidation stability.
[6] The method for producing a liquid hydrocarbon fuel according to any one of [1] to [5], wherein the liquid hydrocarbon fuel is a liquid hydrocarbon fuel that is equivalent to gasoline, a liquid hydrocarbon fuel that is equivalent to kerosene, or a liquid hydrocarbon fuel that is equivalent to a gas oil.
[7] A liquid hydrocarbon fuel produced by a method for producing a liquid hydrocarbon fuel as defined in any one of the above [1] to [6].
[8] An apparatus for producing a liquid hydrocarbon fuel including hydrocracking and hydrogenating a raw material oil, comprising at least feeding members for raw material oil and hydrogen gas,
   a first reaction-step reaction member for carrying out a hydrocracking reaction,
   a second reaction-step reaction member for carrying out a hydrogenation reaction, and
   a reaction product collecting member.

### EFFECTS OF THE INVENTION

According to the present invention, an economically advantageous method capable of accomplishing the production of a desired liquid hydrocarbon fuel can be provided by carrying out a combination of the hydrocracking reaction and the hydrogenation reaction of a raw material oil such as fats and oils and biomass retort oils, or a hydrocarbon or the like in petroleum oils by feeding a low-pressure hydrogen of nearly a normal pressure. The liquid hydrocarbon fuel obtained by the method is a product that is equivalent to gasoline, kerosene and/or a gas oil, and the fuel can be produced according to the present invention.

### BRIEF DESCRIPTION OF THE DRAWINGS

[FIG. 1] FIG. 1 is a schematic view of an apparatus for producing a liquid hydrocarbon fuel of the present invention.
[FIG. 2] FIG. 2 is one example of carbon distribution curves of standard gasoline, kerosene, and gas oil.
[FIG. 3] FIG. 3 is chromatograms and carbon distribution curves of condensed components of reaction products obtained by the method for production of the present invention. Non-Patent Publication 4 shows one example of the carbon distributions with respect to gasoline, kerosene, and gas oil of the liquid hydrocarbon fuel. It could be seen that the carbon distributions of the condensed components of the reaction products produced according to the present invention have nearly the same tendencies as the carbon distributions of standard gasoline, kerosene, and gas oil shown in FIG. 2.

### MODES FOR CARRYING OUT THE INVENTION

One of the features of the present invention is in the aspect that a liquid hydrocarbon fuel can be produced at relatively low costs. While there are some ideas of directly applying the techniques based on petroleum oil raw materials to various raw material oils of the fields of the present invention, there are some disadvantages in accepting economically the use of an expensive precious metal in a catalyst, the use of a high-pressure hydrogen or the like, because locally produced and consumed-type fuel production apparatus is very often important, particularly when biomass raw material is used. In actual situations, it is understood as presupposition that the hydrocracking is carried out by the use of a high-temperature, high-pressure hydrogen, and it is the technical common knowledge that the hydrocracking has been accomplished for the first time under the assumptions of the technical idea mentioned above.

As is seen in the present invention, under low hydrogen pressure, since the hydrocracking reaction (a first reaction step) alone is carried out at a high temperature, it is less likely to concurrently cause a hydrogenation reaction. Therefore, the unsaturated bonds and the like remain so that oxidation stability, which is one of fuel properties is worsened, whereby some disadvantages are caused as fuels. For this reason, such disadvantages are supplemented with a hydrogenation reaction step of a second reaction step, which can also be carried out at a low pressure, whereby the effects of a lowered pressure become significant as a whole, thereby making the process more economically advantageous.

Therefore, it is thought that in the catalyst and the process according to the present invention, the pressure lowering is made possible, so that great influences in reasonableness are made.

### 1. Steps for Producing Liquid Hydrocarbon Fuel

The raw material oil in the present invention is preferably, but not limited to, one or more members selected from fats and oils such as rapeseed oil, cottonseed oil, palm oil, coconut oil, sunflower oil, soybean oil, corn oil, rice oil, oil palm oil, coconut oil, Jatropha oil, and olive oil. Further, fats and oils from seaweeds and algae and animal oils are also preferred. In addition, consumed waste cooking oils for tempura oil are more preferred currently. Dark oils obtained from working process of fats and oils, and further animal oils are also utilizable. The biomass retort oil is made from a waste wood such as a pruned material as a raw material, and included in the raw material oil in the present invention. The hydrocarbons in the petroleum oil are also included in the raw material oil in the present invention, and the raw material oils include gas oils and components having the number of carbon atoms larger than the gas oils, and various waste oils. The raw material oil may be constituted by a single kind, or constituted by plural kinds.

One example of the reaction procedures during the production of a liquid hydrocarbon fuel will be explained. In the present invention, a produced oil is obtained by allowing a raw material oil to pass through a catalyst bed packed with a specified catalyst together with hydrogen under given reaction conditions.

### First Reaction Step

In a first reaction step, as a result of forming carbenium ions at acid sites of zeolite (Non-Patent Publication 3), the cracking due to the cleavages of carbon chains, cyclized dehydrogenation, dehydrogenation, isomerization, and decarboxylation or hydrogenation of an ester moiety of the raw material fat or oil takes place. By the cracking, the physical properties required for fuels such as low-temperature flowability are given.

The feeding pressure of hydrogen during processing is set to from 0.2 to 0.95 MPa. Since the high-pressure gas equipment would be subjected to regulation under the ordinance at a pressure exceeding 1.0 MPa, the pressure is not economically desirable. When the feeding pressure of hydrogen does not satisfy the above lower limit, there is a tendency that the reactivity is lowered, or that the activity is rapidly lowered. Industrially, it is preferable to connect with the second reaction step, so that a hydrogen pressure of from 0.2 to 0.95 MPa, which is a pressure at which a hydrogenation reaction of the second reaction step is efficiently carried out, is selected. The feeding pressure is preferably 0.3 MPa or more, and more preferably 0.5 MPa or more, and preferably 0.95 MPa or less, and more preferably 0.9 MPa or less.

The flow rate of the raw material oil is set at a given value. Specifically, the flow rate of the above raw material oil is set at a liquid hourly space velocity of from 0.05 to 0.5 hr⁻¹. In the present invention, the lower the liquid hourly space velocity, the more advantageous the reaction. When the liquid hourly space velocity is less than the lower limit mentioned above, a reaction vessel with a very large inner volume would be necessitated, so that excessive facility investments would likely to be necessitated. On the other hand, when the liquid hourly space velocity exceeds the above upper limit, the reaction is unlikely to sufficiently progress. The liquid hourly space velocity is preferably 0.05 hr⁻¹ or more, and more preferably 0.1 hr⁻¹ or more, and preferably 0.5 hr⁻¹ or less, and more preferably 0.3 hr⁻¹ or less.

The ratio of the flow rate of hydrogen to the flow rate of raw material oil is set at from 100 to 1,000 NL (normal liters) of the hydrogen per 1 L of the raw material oil. When the ratio of the hydrogen to the raw material oil does not satisfy the above lower limit, there is a tendency that the reactivity is lowered, or that the activity is rapidly lowered. On the other hand, when the ratio exceeds the above upper limit, excessive facility investments for a hydrogen supplying apparatus or the like are likely to be necessitated. The above ratio is preferably 200 NL or more, more preferably 300 NL or more, and even more preferably 400 NL or more, and preferably 900 NL or less, and more preferably 800 NL or less.

In the first reaction step, the reaction temperature, in other words, the temperature at which the above raw material oil and the hydrogen are held, is set to preferably from 200° to 500°C, and more preferably from 200° to 500°C. When the reaction temperature is lower than 200°C, a desired reaction may not progress depending upon the kinds of the raw material oils in some cases, and when the reaction temperature exceeds 500°C, there are some tendencies that the carbon formation of the raw material oil progresses, thereby making the life of the catalyst shorter. The reaction temperature is even more preferably from 350° to 450°C. It is more preferable that when gasoline is used as a main object, the reaction temperature is from 410° to 450°C, that when kerosene is used as a main object, the reaction temperature is from 380° to 430°C, and that when gas oil is used as a main object, the reaction temperature is from 350° to 400°C.

### Second Reaction Step

Since the cracked solution obtained through the first reaction step is at a high temperature, the hydrogenation reaction does not efficiently concurrently take place, so that the olefins are formed or other various unsaturated bonds and a trace amount of ester sites remain in the solution. These unsaturated bonds and ester sites (and fatty acids modified in the reaction process) inhibit oxidation stability, or exist as unnecessary colored components that worsen the hues of the external appearance of the fuel properties. Therefore, it is preferable that unsaturated bonds are saturated in the hydrogenation reaction of the second reaction step to give oxidation stability and improve hues as an external appearance for the values of manufactured articles. Especially when the raw material is a fat or oil, fatty acids remain due to a reaction of an undegraded ester site in a trace amount with a formed water, thereby bringing about the worsening of oxidation stability even when contained in a trace amount, which becomes a decisive defect. For this reason, it is preferable that in the hydrogenation in the hydrogenation reaction in the second reaction step, the oxygen content in the cracked solution is nearly completely cracked out.

In this step, the feeding pressure of hydrogen during processing is set to from 0.2 to 0.95 MPa. The hydrogenation reaction is thermodynamically advantageously a pressurizing system of hydrogen. While a high-pressure hydrogen is significant, in consideration of the matter that it is possible to hydrogenate, i.e. saturate a double-bonded group, an ordinary fat or oil at a pressure of from 0.2 to 0.8 MPa, the hydrogenation of the above cracked solution can be carried out at a low-pressure hydrogen of 0.8 MPa or so at the highest. The feeding pressure is preferably 0.3 MPa or more, and more preferably 0.5 MPa or more, and preferably 0.95 MPa or less, and more preferably 0.9 MPa or less.

In addition, the flow rate of the cracked solution obtained through the first reaction step is set at a liquid hourly space velocity of from 0.02 to 5 hr⁻¹. The liquid hourly space velocity is preferably 0.2 hr⁻¹ or more, and more preferably 0.25 hr⁻¹ or more, and preferably 5 hr⁻¹ or less, and more preferably 3 hr⁻¹ or less.

The ratio of the flow rate of hydrogen to the flow rate of the cracked solution is set at from 100 to 1,000 NL of the hydrogen per 1 L of the cracked solution which is the same as in the first reaction step. The above ratio is preferably 200 NL or more, and more preferably 300 NL or more, and preferably 900 NL or less, and more preferably 800 NL or less. Practically speaking, it is preferable that the flow rates of hydrogen are the same because the first reaction step and the second reaction step are connected.

In the second reaction step, the reaction temperature, in other words, the temperature at which the above cracked solution and the hydrogen are held is set to preferably from 140° to 360°C, and more preferably from 200° to 340°C. When the reaction temperature is 140°C or lower, a hydrogenation reaction is not likely to take place, and when the reaction temperature is 360°C or more, the reverse reaction is caused, so that the hydrogenation reaction is less likely to take place from the viewpoint of the thermodynamic limitations.

### Optional Step

A liquid hydrocarbon fuel which is a reaction product of the hydrocracking reaction and the subsequent hydrogenation reaction as mentioned above can be fractionated into a desired liquid hydrocarbon fuel through, for example, a gas-liquid separating step, a rectifying step, or the like. Here, with the reaction of the oxygen component and the sulfur component contained in the raw material oil, there is a possibility of generating water, carbon monoxide, carbon dioxide, hydrogen sulfide, or the like. However, these components can be removed by setting up a known gas-liquid separation facility and other device for removing by-product gases between the plurality of reaction vessels, and in the reaction product collecting step.

### 2. Hydrocracking Reaction Catalyst and Hydrogenation Reaction Catalyst

The first reaction step of the method for producing a liquid hydrocarbon fuel of the present invention is accomplished by reacting a raw material oil with a hydrogen gas, in the presence of a hydrocracking reaction catalyst. The hydrocracking reaction catalyst is a catalyst containing one or more members selected from Group 1 and/or Group 2 given below:
Group 1: a solid acid catalyst including zeolite and/or silica-alumina; and
Group 2: a catalyst in which one or more metal components selected from the group consisting of ruthenium, nickel, molybdenum, and copper are supported to the solid acid catalyst.

The catalyst is produced by, for example, the following method.

In the first reaction step, the catalyst is a solid acid catalyst of zeolite and/or silica-alumina, or one in which one or more metal components selected from the group consisting of ruthenium, nickel, molybdenum, and copper, which are activity promoting agents, can be supported to the solid acid catalyst according an immersion method which is a conventional method. The supporting amount of the metal, based on 100 parts by mass of the supporting catalyst, is preferably from 0.05 to 35 parts by mass, more preferably from 0.1 to 30 parts by mass, and even more preferably from 0.1 to 25 parts by mass.

The hydrocracking reaction catalyst is preferably a solid acid having a cracking ability that also functions as a catalyst support, and one or more solid acids selected from the group consisting of silica, silica-alumina, zeolite, silica-zirconia, alumina-zirconia, and titania are recommended as more preferred ones. Zeolite refers to an aluminosilicate having fine pores in the crystals, and Y-type zeolite, X-type zeolite, ZSM zeolite, and the like are preferred. Among them, the Y-type zeolite is more preferred in the present invention because the pore size of the zeolite is the largest, and larger molecules intended to be cracked are easily penetrated, and thereby the internal of the pores can be effectively used.

In the first reaction step, the ester sites of the fat or oil are cracked by a decarbonylation reaction, a decarboxylation reaction, or a hydrogenation dehydration reaction with a catalyst mentioned above under a hydrogen gas, as mentioned above. Also, the reactions required in modifications of fuels to gasoline, kerosene or a gas oil, such as a cracking reaction to form low-molecular weight components, a dehydrogenation reaction, an isomerization reaction, a cyclization reaction or the like, due to the cleavages of carbon chains progress with carbenium ions produced by Bronsted acid sites of the solid acid. Therefore, in order to satisfy the above two points, it is preferable that the solid acid is functioned as a support for a metal catalyst, and supports a metal catalyst, from the viewpoint of meeting various reactions mentioned above. Therefore, the catalyst support is a solid acid, and acid sites exhibiting at silica-alumina binding sites are active sites, so that silica-alumina and zeolite are basically preferred.

In the first reaction step, as a result of continued hydrocracking reactions, carbons may be gradually accumulated to a catalyst with the passage of time. When the cracking reaction efficiency is lowered to an unacceptable level, it is preferable to perform the removal of carbons. When the removal of carbons is carried out from the catalyst, it is recommended that removal by oxidation is carried out with the air or the like. Although there is a method of removing carbons by combustion such as oxidation with the air or the like in an appropriate timing, it is recommended that the oxidation is gradually progressed from an oxygen concentration of 1% or so, and the catalyst bed temperature is controlled to a temperature of 450°C or lower, in order to avoid the accompaniment of abrupt generation of heat. Finally, the treatment is carried out by the air alone, and if a temperature raise is not found, the oxidation is terminated. After a certain time, the reaction mixture is reduced with hydrogen to be subjected to the reaction.

Here, in the production steps in which gasoline and kerosene are main manufactured products, since the reaction temperatures are held at relative high temperatures, the carbon production rates surpass the carbon production-suppressing effects by the active hydrogens, so that the catalytic degradation due to the carbon accumulation is increased, thereby making it likely to be difficult to maintain the catalytic activity. As a countermeasure in that case, it is preferable that a pre-reactor for suppressing the carbon production is set up as the constitution of the first reaction step. In the pre-reactor, while the degradation of the ester site also takes place, the main purpose of the pre-reactor is in the cleavages of the carbon chains. For this purpose, the pre-reactor is constituted by a catalyst mainly composed of zeolite to which a precious metal, Ni or the like is added. It is more preferable that two sets are arranged in parallel, whereby the cleavage reactions of the carbon chains are performed alternately so that the above oxygen oxidation is carried out alternately to remove carbons, thereby carrying out continuous operations. After a certain time, the reaction mixture is connected to a hydrocracking reaction.

The hydrogenation reaction catalyst to be used in the second reaction step is a catalyst containing one or more catalysts selected from Group 3 and/or Group 4 given below:
Group 3: a solid acid catalyst including silica, zeolite and/or silica-alumina to which one or more metal components selected from the group consisting of nickel, palladium, and copper are supported; and
Group 4: an MgO-containing silica to which one or more metal components selected from the group consisting of nickel, palladium, and copper are supported.

Regarding the catalyst used in the second reaction step, one or more metal components selected from the group consisting of nickel, palladium, and copper can be supported to a solid acid catalyst silica, zeolite and/or silica-alumina by an immersion method which is a conventional method. In addition, as a hydrogenation reaction catalyst, a commercially available catalyst is generally well circulated and can be suitably used.

Therefore, the metal components can be used without being particularly limited thereto. The metal components are not limited to the group of nickel, palladium, and copper, and preferably a solid acid to which one or more metal components having hydrogenating ability are supported, and an MgO-containing silica to which one or more metal components mentioned above are supported can also be suitably used in the second reaction step.

The supporting amount of the metal in the hydrogenation reaction catalyst is preferably from 0.05 to 35 parts by mass, more preferably from 0.1 to 30 parts by mass, and even more preferably from 0.1 to 25 parts by mass, based on 100 parts by mass of the support.

Also in the second reaction step, the degradation of the catalyst cannot be avoided. For example, a metal soap of nickel or the like is generated by a fatty acid with a slightly unreacted ester site or in the course of degradation of the fatty acid, so that the activity would be lost. In the case as described above, the fatty acid is subjected to removal by oxidation in the same manner as in the catalyst of the first reaction step to regain the activity of the metal. In addition, the sulfurization treatment in a hydrogen stream is preferably performed after the oxidation treatment.

The particle sizes of the solid acids to be used in the first reaction step and the second reaction step are preferably from 0.01 to 3.0 mm, and more preferably from 0.03 to 3.0 mm. When the particle sizes are smaller than 0.01 mm, it is undesirable because the pressure loss of the catalyst bed becomes excessively large, and the amount of scattered catalyst is likely to increase. On the other hand, when the particle sizes are larger than 3 mm, a space is formed between the catalysts, so that fats and oils can pass therethrough; however, the larger particles are undesirable because the surface area per unit volume is small, thereby making it likely to worsen the contact efficiency. In the case of industrial applications, the catalyst having particle sizes of from 0.5 to 3 mm is more preferably employed, from the viewpoint of handling the catalyst particles.

The BET specific surface area of the catalyst to be used in the first reaction step and the second reaction step is, for example, preferably 150 m²/g or more, more preferably 250 m²/g or more, and even more preferably 400 m²/g or more, and preferably 1,200 m²/g or less, more preferably 1,000 m²/g or less, and even more preferably 800 m²/g or less.

Regarding the catalyst in the first reaction step, the activity of the acid sites of ruthenium and nickel is maintained. Copper promotes hydrocracking, and molybdenum contributes to modifications of fuels such as isomerization and dehydrogenation. A further metal platinum, iridium, iron, cobalt, rhenium, or magnesium is also suitable as a substitutive metal or a supplementary additional metal, and catalysts further supported by these metals are more preferred.

Regarding the catalyst in the second reaction step, a further metal platinum, iridium, iron, or cobalt is also suitable as a substitutive metal or a supplementary additional metal. Magnesium is added for the purpose of improving the function of the support. Catalysts further supported by these metals are more preferred.

It is preferable that the hydrocracking catalyst or hydrogenation catalyst is filled in a reaction vessel such as a known reaction tube. As the form of the reaction vessel, a fixed bed method can be employed. Hydrogen can be employed in either of a countercurrent or cocurrent form against the raw material oil or the cracked solution. In addition, a form in which countercurrent and cocurrent forms are combined may be employed using a plurality of reaction vessels. A general form is a down flow form, and a cocurrent gas-liquid form can be employed. Also, the reaction vessels may be used alone or in a combination in a plurality, and a structure in which an internal of one reaction vessel is zoned into plural catalyst beds may be employed.

According to the method of the present invention described above, a liquid hydrocarbon fuel having controlled carbon distributions depending upon its purpose of use and having low-temperature flowability and oxidation stability can be produced. Alternatively, according to the method of the present invention described above, a liquid hydrocarbon fuel that is equivalent to gasoline, a liquid hydrocarbon fuel that is equivalent to kerosene, or a liquid hydrocarbon fuel that is equivalent to a gas oil can be produced. In the present invention, one of the features is in that the reaction temperature in the first reaction step is set, so that the these liquid hydrocarbon fuels can be individually produced.

### 3. Liquid Hydrocarbon Fuel and Apparatus for Producing Liquid Hydrocarbon Fuel

The liquid hydrocarbon fuel of the present invention is characterized in that a liquid hydrocarbon fuel is produced by a method for producing a liquid hydrocarbon fuel of the present invention. The liquid hydrocarbon fuel obtained is highly valuable as a fuel because each of the hydrocarbons equivalent to gasoline, a gas oil and kerosene is mainly obtained as a manufactured article, from the viewpoint of boiling points and the number of carbon atoms.

The apparatus for producing a liquid hydrocarbon fuel of the present invention is an apparatus for producing a liquid hydrocarbon fuel including hydrocracking or hydrogenating a raw material oil, the apparatus comprising a feeding means for a raw material oil, a feeding means for a hydrogen gas, a first-reaction step member for reacting a fed raw material oil and a fed hydrogen gas in the presence of a hydrocracking reaction catalyst, a second-reaction step member for reacting the produced cracked solution and a fed hydrogen gas in the presence of a hydrogenation reaction catalyst, and a reaction product collecting member. Further, it is preferable that the apparatus for producing a liquid hydrocarbon fuel of the present invention comprises a means of regulating a flow rate of a raw material oil and a flow rate of a hydrogen gas, a hydrogen gas production or collection apparatus or a reaction product separation apparatus for distilling and separating a reaction-terminated product, or the like.

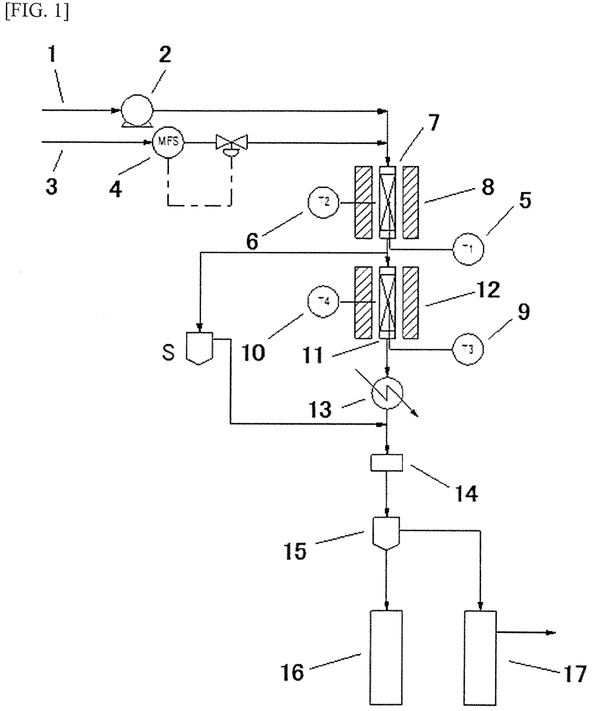

The apparatus for producing a liquid hydrocarbon fuel of the present invention will be described hereinafter more specifically referring to FIG. 1.

The apparatus of the present invention comprises at least three members:
[1] feeding members for a raw material oil and a hydrogen gas,
[2] reaction members (for a first reaction step and a second reaction step), and
[3] a reaction product collecting member.
In [1] the feeding members for a raw material oil and a hydrogen gas, a raw material oil is fed from a line 1 to an upper part of a reaction tube 7 through a liquid feeding pump 2, and hydrogen is fed from a line 3 to an upper part of a reaction tube 7 through a regulating unit 4 for a flow rate of a hydrogen gas. In [2] the reaction members, a reaction tube 7 is used as a hydrocracking reactor, and a reaction tube 11 is used as a hydrogenation reactor. Each of a thermometer 5 and a thermometer 9 is set in a center of the internal of the reaction tube, and the center is heated and temperature-controlled with an electric heating furnace 8 equipped with a thermometer 6 and an electric heating furnace 12 equipped with a thermometer 10. In the second reaction step, a line (not illustrated in the figure) may be provided for feeding a fresh hydrogen. In [3] the reaction product collecting member, a gas-liquid mixture discharged from a lower part of a reaction tube 11 is cooled with a condenser 13, and then led to a gas-liquid separation apparatus 15 via a pressure-regulating valve 14. In a condensate receiver 16, water is mainly collected. The produced hydrocarbons and unreacted products are accumulated in a second-step condensate receiver 17 provided with a cooling function. An unreacted hydrogen gas and a gaseous hydrocarbon are discharged from the condensate receiver 17 (the gaseous hydrocarbon being separated from a hydrogen gas in a separate apparatus, and used as a fuel or the like). The contents of the condensate receiver 17 are separated with a different distillation apparatus to the hydrocarbons equivalent to gasoline, a gas oil or kerosene from the unreacted products (high-boiling point products). A sampling opening S is provided so that the reaction liquid sampling can be taken as needed in the intermediary of the hydrocracking reaction tube and the hydrogenation reaction tube.

The hydrogen gas production or collection apparatus includes, for example, a steam modification reaction apparatus comprising a feeding member for a low-boiling point, gaseous product recycled raw material separated from a reaction product in the apparatus for producing a liquid hydrocarbon fuel of the present invention, or a manufactured gas feeding member (e.g., a facility comprising a ruthenium-alumina catalyst).

As the reaction product separation apparatus for separating a reaction product, for example, a normal pressure or reduced pressure distillation tower can be employed. A low-boiling point gaseous material is recycled to the hydrogen gas production apparatus. Also, as a substitute for varying the reaction conditions, in a case where it is desired to have a larger amount of a kerosene equivalent portion or a gasoline equivalent portion, the gas oil equivalent portion may be recycled and fed to the hydrocracking apparatus, and converted to a kerosene equivalent portion or a gasoline equivalent portion.

High-boiling point substances discharged from a reaction product separation apparatus, i.e., a lower part of the distillation tower, are collected as a fuel for combustion, which may be fed to combustion or energy collecting apparatus for utilizing as heat sources necessary for an overall apparatus.

### EXAMPLES

The present invention will be described more specifically hereinbelow on the bases of Test Example and Example, without intending to limit the present invention to these Examples and the like.

### Test Example 1: Confirmation Test of Controlling Properties of Carbon Distributions (Test of First Reaction Step)

### Embodiment of Hydrocracking Reaction

A fixed bed circulation-type reaction apparatus of a pressurizing system with a constitution as shown in FIG. 1 was used as an apparatus for producing a liquid hydrocarbon fuel. Here, Test Example 1 is a confirmation test for a first reaction step, so that a reaction tube 11 simply served as a line without filling with a catalyst.

An internal of a reaction tube 7 was filled with a catalyst (50 cc), and a hydrocracking reaction of fats and oils was carried out in a first reaction step. A reaction tube 7 having an inner diameter of 16.7 mm and a catalyst-filled length of 260 mm was used as a reactor, and a thermocouple was set at a center in a catalyst bed to measure a temperature of the catalyst bed.

The reaction tube 7 was temperature-controlled with an electric heating furnace 8, a reaction product of the first reaction step (cracked solution) was cooled with an ambient temperature water chiller (condenser) 13, and a condensed component was then separated. Liquid components collected in a condensate receiver (hydrocarbons) 17 were subjected to gas chromatography analysis. The flow rate of hydrogen was controlled with a regulating unit 4 for a flow rate of hydrogen gas. The fats and oils which were the raw material oils were fed with a metering liquid pump 2.

The reaction conditions were as follows.
Raw material: a commercially available edible soybean oil
Flow rate of a raw material oil: 12.6 mL/hr
Flow rate of hydrogen: 10,080 NmL/hr (In other words, a flow rate of a hydrogen gas was 800 NL, per 1 L of the raw material oil.)
Feeding pressure of hydrogen (gas): 0.8 MPa
Liquid hourly space velocity = 0.25 (a feeding rate of the raw material oil, L/hr/catalyst L)
Reaction temperatures: conducted at three levels of 370°C, 400°C, and 430°C
Catalyst: one in which 4 parts by mass of copper is supported based on 100 parts by mass of zeolite; copper being added to Zeolite 330 (1 mm pellets) manufactured by Tosoh Corporation. The preparation of the catalyst was carried out by an immersion method in accordance with a conventional method. The amount of the catalyst: 50 cc, the catalyst bed height: 260 mm.
Integrated samples that were under continuous operation for 8 hours were evaluated.

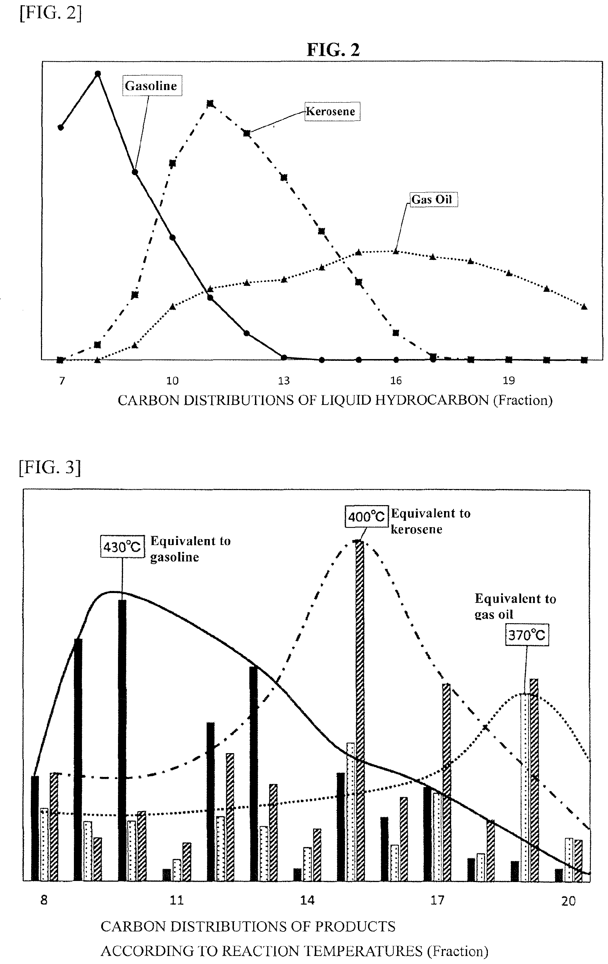

The condensed components of a reaction product were subjected to gas chromatography analysis. The results are shown in FIG. 3. It can be seen from the results that hydrocarbons having lower molecular weights are produced according to the increase in the reaction temperatures. It can be seen from the comparisons of FIGs. 2 and 3 that a product that is equivalent to petroleum-based gasoline, a product that is equivalent to kerosene, or a product that is equivalent to a gas oil is nearly obtained. As such, in the present invention, it can be expected that a reaction product having desired carbon distributions is obtained with minor adjustments in reaction conditions (reaction temperature and liquid hourly space velocity or the like).

The results of measuring the acid values of the condensed components of the reaction product are given hereinbelow.
in the case of 370°C: acid value: 14.5;
in the case of 400°C: acid value: 1.8; and
in the case of 430°C: acid value: 0.6.

As such, the acid value is lowered with the increase in the reaction temperature, so that it is observed that the reaction efficiency is elevated (because unreacted esters and produced water form a fatty acid).

From these results, it can be expected that a liquid hydrocarbon fuel having a desired number of carbon atoms is obtained by carrying out hydrogenation treatment and distillation steps.

### Example 1: Test for Production of Product Mix of Gas Oil Equivalent Product and Kerosene Equivalent Product

### Embodiment of Hydrocracking Reaction and Hydrogenation Reaction

A gas oil equivalent product is important as a current business manufactured article as a bio-diesel fuel. A kerosene equivalent product has been remarked as a developmental manufactured article as a bio-jet fuel for the next generation, the provision of which is in demand in the aviation industries. In view of the above, in order to make it possible to produce both the business manufactured article and the developmental manufactured article, a production test of a liquid hydrocarbon fuel was conducted.
Bio-diesel fuel (gas oil equivalent product): the number of carbon atoms C15 to C20 (the main components of the fuel)
Bio-jet fuel (kerosene equivalent product): the number of carbon atoms C8 to C14 (the main components of the fuel)

In this example, a fixed bed circulation-type reaction apparatus of a pressurizing system with a constitution as shown in FIG. 1 was used as the continuous apparatus for the first reaction step and the second reaction step.

Internals of reaction tubes 7 and 11 were each filled with a given amount of a catalyst, and a hydrocracking reaction of fats and oils was carried out in a first reaction step, and a hydrogenation reaction of a product was carried out in a second reaction step. A thermocouple was set at a center in each of catalyst beds to measure a temperature of the catalyst bed.

A reaction product of a second reaction step was cooled with an ambient temperature water cooler (condenser) 13, and the condensed components were then separated. The following evaluations were made on the cracked solution at the outlet of the first reaction step and the liquid components collected at the condensate receiver (hydrocarbons) 17. Here, the hydrogen at the outlet of the first reaction step is fed in an entire amount to a second reaction step. The cracked solution is as a matter of course fed in an entire amount to a second reaction step subsequent to the first reaction step.

The reaction conditions were as follows.
Raw material: a commercially available edible soybean oil
Flow rate of a raw material oil: 12.6 mL/hr
Flow rate of hydrogen: 10,080 NmL/hr (In other words, a flow rate of a hydrogen gas was 800 NL, per 1 L of the raw material oil.)
Feeding pressure of hydrogen (gas): 0.8 MPa
Continuous reaction time: 24 hr

### First Reaction Step

Liquid hourly space velocity = 0.25 (a feeding rate of the raw material oil, L/hr/catalyst L)
Reaction temperature: 400°C
Catalyst: one in which 18 parts by mass of a total of ruthenium, nickel, copper, and molybdenum were supported based on 100 parts by mass of zeolite; each of metals being added to Zeolite 330 (3 mm pellets) manufactured by Tosoh Corporation. The preparation of the catalyst was carried out by an immersion method in accordance with a conventional method. The amount of the catalyst: 50 mL, the catalyst bed height: 260 mm.

### Second Reaction Step

Liquid hourly space velocity = 0.50 (feeding rate of a cracked solution, L/hr/catalyst L)
Reaction temperature: 280°C
Catalyst: N102F (a catalyst in which nickel is supported to MgO-containing silica), manufactured by JGC Catalyst and Chemicals Ltd.; nickel: 21 parts by mass, NiO + SiO +MgO +Others: 79 parts by mass, 3 mm pellets. The amount of the catalyst: 25 mL, the catalyst bed height: 130 mm.

Here, Table 1 summarizes the main conditions of Test Example 1 and Example 1.

**[Table 1]**

| | | Test Example 1 | Example 1 |
|---|---|---|---|
| Raw Material Oil | | Commercially Available Edible Soybean Oil | |
| First Reaction Step | Catalyst | Zeolite - Cu | Zeolite - Ru + Ni + Cu + Mo |
| | Hydrogen Feeding Pressure | 0.8 MPa | 0.8 MPa |
| | Liquid Hourly Space Velocity | 0.25 hr⁻¹ | 0.25 hr⁻¹ |
| | Flow Rate Ratio | 800 NL | 800 NL |
| | Reaction Temperature | 370°C, 400°C, or 430°C | 400°C |
| Second Reaction Step | Catalyst | | MgO-Containing Silica - Ni |
| | Hydrogen Feeding Pressure | | 0.8 MPa |
| | Liquid Hourly Space Velocity | | 0.50 hr⁻¹ |
| | Flow Rate Ratio | | 800 NL |
| | Reaction Temperature | | 280°C |
| Reaction Time | | 8 hr | 24 hr |

The following evaluations were made on the liquid hydrocarbon fuel obtained through the second reaction step.
As the evaluation of the low-temperature flowability, a freezing point (°C)
As the evaluation of the oxidation stability, an acid value (mgKOH/g - sample) and an iodine value (I₂ g/100 g- sample)
Gas Chromatography Analysis:
(C8 to 14)/(C 15 to 20) % (in other words, it means a component ratio of a kerosene equivalent product to a gas oil equivalent product.)

Integrated samples after 24 hours were analyzed. The results are given hereinbelow.
Freezing point: It was confirmed to be -20°C or lower.
Acid value: It was confirmed to be 0.1 or less (acid value of the cracked solution at an outlet of the first reaction step: 3.30)
Iodine value: 7.7 (iodine value of the cracked solution at an outlet of the
first reaction step: 27.9; iodine value of the raw materials: 126.3)
Component ratio of kerosene to gas oil (C8 to C14)/(C15 to 20): 42%/58%

It could be seen from the above experimental results that if the distillation procedures of the liquid hydrocarbon fuel obtained through the second reaction step were carried out, the kerosene equivalent products and the gas oil equivalent products can be collected in a proportion of 4:6. Further, the low-temperature flowability and the oxidation stability of the liquid hydrocarbon fuel obtained were sufficiently satisfactory as a mixture of the kerosene equivalent products and the gas oil equivalent products. Specifically, the low-temperature flowability and the oxidation stability were as follows.

Regarding the low-temperature flowability (freezing point), a freezing point of -7.5°C or lower is recommended in a bio-diesel fuel, so that it can be judged to be sufficiently satisfactory.

Regarding the oxidation stability (acid value), an acid value of 0.1 or less is obtained, which, for example, clears the standard for the gas oil of 0.13. Regarding the oxidation stability (iodine value), a value of 7.7 is obtained after the second reaction step. When considering that the guideline for the diesel fuel of a methyl ester of a fatty acid which is a conventional product is 100 or less, the value is remarkably improved.

### INDUSTRIAL APPLICABILITY

The liquid hydrocarbon fuel obtained by the method of the present invention can be suitably used as a liquid hydrocarbon fuel equivalent to gasoline, a liquid hydrocarbon fuel equivalent to a gas oil or a liquid hydrocarbon fuel equivalent to kerosene.

### EXPLANATION OF NUMERALS

1 Line
2 Liquid feeding pump
3 Line
4 Regulating unit for flow rate of hydrogen gas
5 Thermometer
6 Thermometer
7 Hydrocracking reaction tube
8 Electric heating furnace
9 Thermometer
10 Thermometer
11 Hydrogenation Reaction tube
12 Electric heating furnace
13 Condenser
14 Pressure-regulating valve
15 Gas-liquid separation apparatus
16 Condensate receiver (water)
17 Condensate receiver (hydrocarbons)
S Sampling opening (sample collecting at outlet in first reaction step)

## Claims

1. A method for producing a liquid hydrocarbon fuel comprising a first reaction step and a second reaction step given below:
the first reaction step: hydrocracking a raw material oil in the presence of a hydrocracking reaction catalyst
at a feeding pressure of hydrogen of from 0.2 to 0.95 MPa,
a liquid hourly space velocity of a liquid volume of the raw material oil of from 0.05 to 0.5 hr⁻¹, and
a ratio of a flow rate of the hydrogen to a flow rate of the raw material oil of from 100 to 1,000 NL of the hydrogen per 1 L of the raw material oil, wherein the hydrocracking reaction catalyst is a catalyst comprising one or more members selected from Group 1 and/or Group 2 given below:
Group 1: a solid acid catalyst including zeolite and/or silica-alumina; and
Group 2: a catalyst in which one or more metal components selected from the group consisting of ruthenium, nickel, molybdenum, and copper are supported to the solid acid catalyst, to give a cracked solution; and
the second reaction step: hydrogenating the cracked solution in the presence of a hydrogenation reaction catalyst
at a feeding pressure of hydrogen of from 0.2 to 0.95 MPa,
a liquid hourly space velocity of a liquid volume of the cracked solution of from 0.2 to 5 hr⁻¹, and
a ratio of a flow rate of the hydrogen to a flow rate of the cracked solution of from 100 to 1,000 NL of the hydrogen per 1 L of the cracked solution, wherein the hydrogenation reaction catalyst is a catalyst comprising one or more members selected from Group 3 and/or Group 4 given below:
Group 3: a solid acid catalyst comprising silica, zeolite and/or silica-alumina to which one or more metal components selected from the group consisting of nickel, palladium, and copper are supported; and
Group 4: an MgO-containing silica to which one or more metal components selected from the group consisting of nickel, palladium, and copper are supported, to give a liquid hydrocarbon fuel.

2. The method for producing a liquid hydrocarbon fuel according to claim 1, wherein the raw material oil is one or more members selected from the group consisting of rapeseed oil, cottonseed oil, palm oil, coconut oil, sunflower oil, soybean oil, corn oil, rice oil, oil palm oil, coconut oil, Jatropha oil, olive oil, waste cooking oils, dark oils, animal oils, fats and oils from seaweeds and algae, biomass retort oils, a hydrocarbon component in petroleum oil having the number of carbon atoms larger than gas oil, and various waste oils.

3. The method for producing a liquid hydrocarbon fuel according to claim 1 or 2, wherein the solid acid catalyst is one or more solid acid catalysts selected from the group consisting of silica, silica-alumina, zeolite, silica-zirconia, alumina-zirconia, and titania.

4. The method for producing a liquid hydrocarbon fuel according to any one of claims 1 to 3, wherein the hydrocracking reaction catalyst or hydrogenation reaction catalyst further comprises a metal supported thereto, wherein the metal is one or more members selected from the group consisting of platinum, iridium, iron, cobalt, rhenium, and magnesium.

5. The method for producing a liquid hydrocarbon fuel according to any one of claims 1 to 4, wherein the liquid hydrocarbon fuel has a controlled carbon distribution depending upon its purpose, and has low-temperature flowability and oxidation stability.

6. The method for producing a liquid hydrocarbon fuel according to any one of claims 1 to 5, wherein the liquid hydrocarbon fuel is a liquid hydrocarbon fuel that is equivalent to gasoline, a liquid hydrocarbon fuel that is equivalent to kerosene, or a liquid hydrocarbon fuel that is equivalent to a gas oil.

7. A liquid hydrocarbon fuel produced by a method for producing a liquid hydrocarbon fuel as defined in any one of claims 1 to 6.

8. An apparatus for producing a liquid hydrocarbon fuel comprising hydrocracking a raw material oil, comprising at least
feeding members for raw material oil and hydrogen gas,
a first reaction-step reaction member for carrying out a hydrocracking reaction,
a second reaction-step reaction member for carrying out a hydrogenation reaction, and
a reaction product collecting member.
